# EUROPÄISCHE PATENTANMELDUNG

(11) **EP 2 055 374 A2**
(43) Veröffentlichungstag der Anmeldung: **06.05.2009**
(21) Anmeldenummer: 08164327.2
(22) Anmeldetag: 15.09.2008
(51) Int. Cl.: B01J 19/00

(54) **Mikroreaktor und Verfahren zur Herstellung eines solchen sowie Verfahren zur Herstellung eines Substrats für einen Mikroreaktor**

(30) Priorität: 13.10.2007 DE 102007049172
(71) Anmelder: Micro Systems Engineering GmbH, 95180 Berg (DE)
(72) Erfinder: Schwanke, Dieter, 95030 Hof (DE); Harnack, Mirco, 95180 Berg (DE); Bittner, Achim, 96224 Burgkundstadt (DE); Schmid, Ulrich, 1140 Wien (AT)
(74) Vertreter: Lindner-Vogt, Karin L.

(57) **Zusammenfassung**

Die vorliegende Erfindung betrifft einen Mikroreaktor, der ein Substrat (10, 20, 80) mit einer Hohlraumstruktur und mindestens ein auf und/oder in der Hohlraumstruktur angeordnetes katalytisch aktives Material aufweist. Die Erfindung zeichnet sich dadurch aus, dass das Substrat (10, 20, 80) eine erste Schicht (11, 21, 80) und ggf. mindestens eine weitere Schicht (12, 22) aus einem keramischen Material aufweist, wobei die erste Schicht (11, 21, 80) aus mindestens einer ersten Komponente aus einem kristallinen Keramikmaterial und/oder einem Glasmaterial als Matrix und einer zweiten Komponente aus einem weiteren kristallinen Keramikmaterial enthält. Die Hohlraumstruktur (14, 24, 84) ist dadurch gebildet, dass Mantelbereiche der Kristalle und/oder Kristallagglomerate der zweiten Komponente in der ersten Schicht (11, 21, 80) mindestens bereichsweise herausgeätzt sind. Die Erfindung betrifft ferner ein Verfahren zur Herstellung eines derartigen Mikroreaktors sowie ein Verfahren zu Herstellung eines Substrats für einen derartigen Mikroreaktor.

## Beschreibung

Die Erfindung betrifft einen Mikroreaktor, der ein Substrat mit einer Hohlraumstruktur und mindestens ein auf und/oder in der Hohlraumstruktur angeordnetes katalytisch aktives Material aufweist. Die Erfindung betrifft ferner ein Verfahren zur Herstellung eines derartigen Mikroreaktors sowie ein Verfahren zur Herstellung eines Substrats für einen Mikroreaktor.

Ein Mikroreaktor stellt ein miniaturisiertes Reaktionssystem für die Verfahrenstechnik und die chemische Prozesstechnik dar. Derartige Mikroreaktoren sind beispielsweise mit Fluidkanälen, Reaktionskammern, Reaktionsräume, Heizvorrichtungen, Mischvorrichtungen oder dergleichen versehen, wobei auch mehrere derartiger Elemente zu einem Mikroreaktorsystem zusammensetzbar sind. Ein derartiger Mikroreaktor kann beispielsweise für einzelne Operationen, wie das Durchführen von chemischen, biochemischen und physikochemischen Reaktionen, Destillieren, Mischen, Trennen, etc. verwendet werden oder auch für eine ganzen Kette derartiger Operationen.

Ein derartiger Mikroreaktor für chemische, biochemische oder physikochemische Reaktionen weist in der Regel für das Zuführen mindestens eines Edukts (Ausgangsstoff, Reaktionspartner) einen oder mehrere Einlässe oder Zuführungen sowie einen oder mehrere Auslässe oder Abführungen für das oder die aus den Edukten entstandene(n) Produkt oder Produkte (Reaktionsprodukt) auf, wobei zwischen diesen mindestens ein Reaktionsraum oder eine Reaktionskammer vorgesehen ist, in der das mindestens eine Edukt in das Produkt oder die Produkte umgewandelt wird. Bei derartigen Reaktionen werden häufig Katalysatoren oder katalytisch aktive Elemente verwendet, welche die jeweilige Reaktion spezifisch beschleunigen ohne selbst umgesetzt zu werden, indem die Aktivierungsenergie herabgesetzt wird.

Die in einem derartigen Reaktor durchgeführten katalytischen Reaktionen umfassen beispielsweise katalytische Reaktionen, die aus der Gruppe bestehend aus Dampf-Reformierung, CO₂-Reformierung, (partielle) Oxidation, Chlorierung, Fluorierung, Hydrierung, Dehydrierung, Nitrierung, CO-Konvertierung, Rückreaktion der CO-Konvertierung, autotherme Reformierung, Verbrennung, Hydrocracken, Reduktion, partielle Reduktion und Hydroentschwefelung ausgewählt ist.

Insbesondere für katalytische Reaktionen zwischen Fluiden (Reaktionen zwischen Gasen und/oder Flüssigkeiten) werden Mikroreaktoren mit einer möglichst großen, spezifischen Oberfläche benötigt, um mit möglichst geringem Materialeinsatz der Edukte eine hohe Reaktionsrate zu erreichen.

Aus der Druckschrift DE 103 13 685 A1 ist ein Mikroreaktor bekannt, der aus mehreren, zu einem Schichtenstapel zusammen gefassten, einzelnen Schichten besteht. Der Schichtenstapel weist hierbei mindestens eine Deckschicht und mindestens eine Kanalschicht auf, wobei die Kanalschicht auf einer Seite mit Mikrostrukturen versehen ist, die zusammen mit der zugewandten Seite der benachbarten Deckschicht Mikrokanäle bilden. Die mikrostrukturierte Schicht kann hierbei aus einer Metallfolie, beispielsweise aus einer Kupfer-, Aluminium- oder Edelstahlfolie, oder aus einer Kunststofffolie, Keramikfolie oder anderen Materialien gefertigt werden. Die Mikrostrukturen können durch Ätzen hergestellt werden, wobei sich durch den Ätzvorgang ein halbelliptischer Querschnitt der einzelnen Mikrostrukturen ergibt. Als Alternative zum Ätzen wird in der Druckschrift das Prägen zur Herstellung der Mikrostrukturen genannt, wobei das gegenüber dem Ätzen einen geringeren Bearbeitungsaufwand aufweist. Die durch eine Kanalschicht und eine Deckschicht ausgebildeten Mikrokanäle weisen eine Breite im Bereich von 400 µm, eine Tiefe von 200 µm und eine Länge von 8 bis 20 mm auf. Der Nachteil eines derartigen Mikroreaktors besteht darin, dass das Verhältnis von bereitgestellter Reaktionsfläche in Bezug auf das Volumen des Mikroreaktors klein ist, so dass der Mikroreaktor für die Bereitstellung der gewünschten, spezifischen Oberfläche insgesamt vergleichsweise groß gebaut werden muss.

In der Druckschrift EP 1 206 316 B1 wird ein chemischer Reaktor für eine katalytische Reaktion beschrieben, die mindestens einen gasförmigen Reaktionspartner aufweist. Der Reaktor sieht eine poröse Struktur vor, die derart angeordnet ist, dass der Strömungsweg des Reaktionspartners in einem Mikrokanal entlang und in Kontakt mit dem porösen Material verläuft. Ein Teil des mindestens einen Reaktionspartners diffundiert molekular transversal in die poröse Struktur, auf welcher ein katalytisch aktives Material angeordnet sein kann, und reagiert zu mindestens einem Produkt, das transversal in den Strömungspfad zurückdiffundiert. Das poröse Material kann aus einem katalytisch aktiven Material, beispielsweise einer katalytischen Keramik oder einem katalytischen Metall in der Form eines Schaums oder eines Filzes bestehen. Alternativ kann das poröse Material aus einem porösen Träger aus einem nicht-katalytischen Material (z.B. aus einem Keramikschaum) bestehen, wobei ein katalytisch aktives Material auf diesem Träger angeordnet ist. Die Porosität kann als geometrisch reguläre Porenstruktur, beispielsweise eine Wabenstruktur oder eine Struktur bestehend aus parallelen Poren, ausgebildet oder als eine geometrisch gewundene oder zufällige Struktur beschaffen sein. Nach den Angaben in der Druckschrift kann der Porositätsgrad beispielsweise etwa 30% bis etwa 98% betragen, wobei die durchschnittliche Porengröße kleiner ist als die kleinste Abmessung der Mikrokanäle. Die Porengröße beträgt etwa 0,1 µm bis etwa 200 µm, so dass molekulare Diffusion ermöglicht wird.

In den Druckschriften US 5,674,301 und WO 00/06295 A1 werden ebenfalls Mikroreaktoren beschrieben, bei denen auf einem Träger mit Poren oder porösen Strukturen ein Katalysator angeordnet ist. Hierbei offenbart die Druckschrift US 5,674,301 ein poröses Substrat, bei dem in den Poren ein Katalysator zur Reformierung von Kohlenwasserstoff vorgesehen ist. Der Druckschrift WO 00/06295 A1 ist eine Reaktorvorrichtung mit einer Reaktionskammer zu entnehmen, wobei im Volumen der Reaktionskammer ein poröser Einsatz vorgesehen ist, den die Reaktionspartner im Wesentlichen vollständig durchqueren. Der poröse Einsatz weist eine mittlere Porosität von kleiner als 1 und eine Transportdistanz nicht mehr als 3 mm auf. Der poröse Einsatz kann hierbei aus einem Pulver, einem porösen Monolithen (beispielsweise ein Metall- oder Keramikschaum, eine Wabenstruktur, eine Rohrreihe, eine Baugruppe mit übereinander gestapelten Mikrokanälen oder eine Kombination dieser Strukturen) oder Fasern bestehen. Für katalytische Reaktionen kann der poröse Einsatz aus einem porösen Träger mit einem darauf angeordneten Katalysatormaterial bestehen.

Der Nachteil dieser bekannten Mikroreaktoren besteht darin, dass das katalytisch aktive Material auf dem Porositätsoberflächenbereich aufgebracht wird, so dass die Oberfläche, die zur Reaktion der Reaktionspartner mit dem katalytisch aktiven Material zur Verfügung steht, stark begrenzt ist. Die durch die Porosität zur Verfügung stehende große Oberfläche wird somit nicht ausgenutzt. Ferner wird in der Druckschrift EP 1 206 316 B1 ein geschäumtes keramisches Material als Substrat beschrieben, das in seiner Gesamtheit aus einer porösen Struktur besteht. Somit können die Bereiche der porösen Struktur lediglich durch die äußeren Abmessungen bestimmt werden.

Die Aufgabe der vorliegenden Erfindung besteht demnach darin, einen Mikroreaktor zu schaffen, bei dem, insbesondere für den Einsatz als Gasreaktor, ein katalytisch aktives Material mit einer möglichst hohen spezifischen Oberfläche bereit gestellt wird, um mit möglichst geringem Materialeinsatz eine hohe Reaktionsrate zu erreichen. Die Aufgabe besteht ferner darin, ein kostengünstiges und einfaches Verfahren zur Herstellung eines Substrats für einen derartigen Mikroreaktor bzw. zur Herstellung eines derartigen Mikroreaktors anzugeben.

Die oben angegebene Aufgabe wird durch einen Mikroreaktor gelöst, bei dem das Substrat eine erste Schicht und gegebenenfalls mindestens eine weitere Schicht aus einem keramischen Material aufweist, wobei die erste Schicht aus mindestens einer ersten Komponenten aus einem kristallinen Keramikmaterial und/oder einem Glasmaterial als Matrix und einer zweiten Komponente aus einem weiteren kristallinen Keramikmaterial enthält, wobei die Hohlraumstruktur dadurch gebildet ist, dass Mantelbereiche der Kristalle und/oder Kristallagglomerate der zweiten Komponente in der ersten Schicht mindestens bereichsweise herausgeätzt sind.

Der erfindungsgemäße Mikroreaktor hat den Vorteil, dass die Hohlraumstruktur aufgrund ihrer Herstellungsweise durch Ätzen eine Struktur darstellt, die durchgängig ist (im Gegensatz zur offenen oder geschlossenen Porosität in Keramiken, die durch Sintern entsteht) und die sich nach der Struktur bzw. Raumform richtet, in der die Mantelbereiche der zweiten Komponente vorliegen. Hierbei werden die Mantelbereiche vorzugsweise aus einer oder mehreren Übergangs- oder Zwischenphasen gebildet. Die Übergangs- und Zwischenphasen weisen bevorzugt gegenüber der Struktur und/oder Zusammensetzung der Kristallinen zweiten Komponente eine geringfügig veränderte Struktur, die kristalline und amorphe Anteile aufweisen kann, und/oder eine geringfügig veränderte Zusammensetzung auf. In der Zusammensetzung können die Mantelbereiche auch Bestandteile der Matrix (erste Komponente) aufweisen. Die Zusammensetzung und/oder die Struktur der Mantelbereiche können dabei über einen bestimmten Bereich variieren. Der Mantelbereich eines Kristalls oder Kristallagglomerats, das aus mehreren Kristallen zusammengesetzt ist, umfasst somit den Korngrenzbereich des jeweiligen Kristalls oder Kristallagglomerats, kann sich aber auch darüber hinaus in den Kristall mit der stöchiometrischen Zusammensetzung der zweiten Komponente hinein erstrecken.

Ein weiterer Vorteil des erfindungsgemäßen Mikroreaktors besteht darin, dass die poröse Struktur durch entsprechende Wahl der Ätzparameter auf einen für die jeweilige Anwendung abgestimmten Bereich beschränkt werden kann. Ebenso kann dadurch, dass das Substrat in der in der Erfindung angegebenen Weise zunächst porosiziert wird und anschließend durch Beschichtung mit einem katalytisch aktiven Material versehen wird, dieses in vorteilhafter Weise in seiner Ausdehnung und Schichtdicke an die jeweilige Anwendung des Mikroreaktors optimal angepasst werden.

In einem bevorzugten Ausführungsbeispiel liegt die geätzte Hohlraumstruktur (porosizierter Bereich) lediglich in einem vorbestimmten Bereich der ersten Schicht vor und reicht bis in eine vorbestimmte Tiefe der ersten Schicht. Die Ausdehnung der geätzten Mantelbereiche der zweiten Komponente, d.h. die Tiefe des porosizierten Bereichs, wird dabei außerdem von den Prozessparametern Art des Ätzmediums, Temperatur, Konzentration des Ätzmittels und Zeit der Einwirkung des Ätzmittels gesteuert. Beispielsweise kann bei einer Prozesszeit von 6 Stunden durch ein phosphorsäurebasiertes Ätzmittel eine Tiefe der Hohlraumstruktur von 20 µm erreicht werden.

Der Ätzschritt wird auch als Porosizieren oder Porosiziervorgang bezeichnet.

Neben der einfachen Prozesssteuerung liegt ein weiterer Vorteil des nasschemischen Ätzprozesses insbesondere in der Ausbildung einer Hohlraumstruktur, die miteinander verbundene Hohlraumstrukturen aufweist, da die Mantelbereiche der Kristalle und/oder Kristallagglomerate nebeneinander liegende Kristalle und Kristallagglomerate der zweiten Komponente miteinander verbinden, so dass das Ätzmittel während des Ätzens entlang der Mantelbereiche in die geätzte Schicht vordringt. Hierbei ist es notwendig, dass sich das Ätzverhalten der Mantelbereiche der Kristalle und Kristallagglomerate der zweiten Komponente von dem Ätzverhalten der die Matrix bildenden ersten Komponente unterscheidet, so dass die Mantelbereiche selektiv herausgeätzt werden können.

Der Vorteil des erfindungsgemäßen Mikroreaktors gegenüber den herkömmlichen Mikroreaktoren besteht in einer Vergrößerung der aktiven Oberfläche durch einen sehr einfachen Ätzprozess unter Erzeugung der vorteilhaften Hohlraumstrukturen, die vorzugsweise als Poren- oder Röhrenstruktur ausgebildet ist. Durch die miniaturisierte Ausführung des Mikroreaktors können Konzentrations- und Temperaturgradienten reduziert werden, so dass gleichbleibende Randbedingungen während und zwischen Testläufen gewährleistet werden können. Durch die kompakte Ausführung des Mikroreaktors wird zudem die Durchführung von Modellreaktionen bei hohen Drücken und/oder hohen Temperaturen bei definierten Strömungsbedingungen (meist laminar) möglich. Wenn eine Glaskeramik als Material des Substrats verwendet wird, so trägt diese zusätzlich zur Reduktion von Konzentrations- und Temperaturgradienten durch ihre geringe Wärmeleitfähigkeit (ca. 3 W/mK) im Vergleich zu Silizium (ca. 150 W/mK) bei.

In einem besonders bevorzugten Ausführungsbeispiel ist das mindestens eine katalytisch aktive Material mittels Abscheidung aus der Gasphase, insbesondere mittels CVD (Chemical Vapor Deposition) oder PVD (Physical Vapor Deposition) auf und/oder in die Hohlraumstruktur aufgebracht. Mittels dieser technisch gut beherrschbaren Verfahren wird eine homogene Bedeckung des katalytisch aktiven Materials auf und/oder in der Hohlraumstruktur erreicht. Da, wie oben dargestellt, die Hohlraumstruktur durchgängig ist, erreicht die Beschichtung auch tiefer gelegene Bereiche der Struktur, so dass die große Oberfläche der Struktur gegenüber den herkömmlichen Porenstrukturen voll ausgenutzt wird und mit dem katalytisch aktiven Material beschichtet für die Reaktion des Edukts vollständig zur Verfügung steht.

Besonders bevorzugte katalytisch aktive Materialien enthalten mindestens ein Element oder eine Verbindung ausgewählt aus der Gruppe Platin, Palladium, Nickel und Rhodium.

Der erfindungsgemäße Mikroreaktor weist in einem bevorzugten Ausführungsbeispiel als zweite Komponente Al₂O₃-Kristallite und/oder eine von Al₂O₃ verschiedene aluminiumbasierte kristalline Verbindung und/oder eine aluminiumoxidbasierte kristalline Verbindung, vorzugsweise mit einem Gesamtanteil von höchstens 40 Volumen% in der Matrix auf, die in den Mantelbereichen der Kristalle und/oder Kristallagglomerate vorzugsweise Silizium und/oder Blei enthält. Diese lassen sich einfach ätzen.

Von besonderem Vorteil ist ein Mikroreaktor bei dem das Substrat mindestens eine zweite Schicht aufweist, wobei die erste Schicht und mindestens eine zweite Schicht mittels LTCC-Technologie ("Low Temperatur Cofired Ceramics"-Technologie) hergestellt sind.

Die LTCC-Technologie ist eine Technologie, die üblicherweise zur Herstellung von mikroelektronischen Substraten mit hoher Belegungsdichte dient. Die LTCC-Technologie basiert auf der Verwendung von gesinterten Keramikträgern. Auf oder in diesen können Leiterbahnen, Kondensatoren, Widerstände und Spulen oder weitere Elemente erzeugt werden. Diese Elemente werden durch Siebdruck oder fotochemische Prozesse auf die jeweilige ungebrannte Schicht aufgebracht. Die ungebrannten Keramikfolien werden einzeln strukturiert und anschließend gestapelt und laminiert. Danach wird zur Verfestigung der Struktur ein definiertes Sinterprofil mit einer Spitzentemperatur von ca. 850°C bis 900°C angewendet. Durch Einsatz der LTCC-Technologie zur Herstellung des Mikroreaktor-Substrats kann ein mikrofluidisches System mit Kanalstrukturen und integrierten sensorischen Elementen oder Heizelementen auf besonders einfache Weise realisiert werden. Ferner ist die LTCC-Keramik im Bezug auf viele häufig verwendete Chemikalien beständig (außer z.B. Flusssäure, KOH oder Phosphorsäure-basierte Ätzmischungen).

Besonders bevorzugt weist die erste Schicht und/oder die mindestens eine zweite Schicht des Substrats ein Heizelement auf, das vorzugsweise oberhalb oder unterhalb der in der ersten Schicht vorgesehenen Hohlraumstruktur angeordnet ist. Ein derartiges Heizelement kann in der unten erläuterten Weise besonders einfach in eine LTCC-Keramik integriert werden. Es trägt zur weiteren Miniaturisierung des Mikroreaktors bei, da keine weiteren, ggf. den Mikroreaktor außen umgebende Heizungen zur Einstellung der gewünschten Reaktionstemperatur verwendet werden müssen.

Einen besonders einfachen Aufbau weist der Mikroreaktor auf, wenn das Substrat mit der Hohlraumstruktur mindestens einen Abschnitt einer Wand eines Reaktionsraums des Mikroreaktors, in dem die Umwandlung mindestens eines Edukts in mindestens ein Produkt stattfindet, bildet, wobei der Bereich mit der Hohlraumstruktur derart angeordnet ist, dass das mindestens eine Edukt an dem Bereich mit der Hohlraumstruktur vorbeiströmt. Hierdurch wird eine einfache Umsetzung des mindestens einen Edukts mit dem Katalysator erreicht, die sich auch durch die Strömungsgeschwindigkeit steuern lässt.

In einem alternativen Ausführungsbeispiel des erfindungsgemäßen Mikroreaktors besteht das Substrat lediglich aus der ersten Schicht, wobei sich die Hohlraumstruktur in einem vorgegebenen Bereich über die gesamte Dicke des Substrats erstreckt. Das Substrat ist in dem Reaktionsraum derart angeordnet, dass das Edukt durch die Hohlraumstruktur hindurch geleitet wird. Dies kann beispielsweise dadurch realisiert werden, dass das Substrat senkrecht zur Strömungsrichtung angeordnet ist und der gesamte Medienfluss durch das als Membran ausgebildete Substrat gezwungen wird. Hierdurch wird eine erhöhte Konversionsrate erreicht, wobei ggf. eine nachteilige Drosselung des Systems in Kauf genommen wird.

Um eine bessere Steuerung der in dem erfindungsgemäßen Mikroreaktor durchgeführten Reaktion(en) zu erreichen, ist in einem Kanal oder dem Reaktionsraum in Strömungsrichtung des Edukts vor dem Abschnitt des Substrats mit der Hohlraumstruktur in oder auf einem Träger oder dem Substrat mindestens ein sensorisches Element, vorzugsweise zur Messung der Strömungsgeschwindigkeit, angeordnet. Alternativ oder zusätzlich ist in einem Kanal oder dem Reaktionsraum in Strömungsrichtung des Edukts nach dem Abschnitt des Substrats mit der Hohlraumstruktur in oder auf einem Träger oder dem Substrat mindestens ein sensorisches Element, vorzugsweise ein chemischer Sensor zur Messung der Güte des Umwandlungsprozesses, vorgesehen. Diese sensorischen Elemente können mit einem Steuergerät verbunden sein, das den Reaktionprozess überwacht und steuert und die von den sensorischen Elementen übermittelten Werte hierfür sammelt und auswertet.

Die obige Aufgabenstellung wird außerdem gelöst durch ein Verfahren zur Herstellung eines Substrats für einen Mikroreaktor, wobei zunächst das Substrat mit einer ersten und ggf. mindestens einer weiteren Schicht bereitgestellt wird, wobei die erste Schicht, die aus mindestens einer ersten Komponente aus einem kristallinen Keramikmaterial und/oder einem Glasmaterial als Matrix und einer zweiten Komponente aus einem weiteren kristallinen Keramikmaterial besteht, die in der Matrix vorliegt, anschließend in einem vorgegebenen Bereich der ersten Schicht selektiv Mantelbereiche der Kristalle und/oder Kristallagglomerate der zweiten Komponente geätzt werden, um eine Hohlraumstruktur in der ersten Schicht zu erzeugen, und schließlich ein katalytisch aktives Material auf und/oder in die Hohlraumstruktur auf- und/oder eingebracht wird.

Dieses Verfahren ist sehr einfach und kostengünstig und ermöglicht die Herstellung eines Substrats mit einer Hohlraumstruktur für einen oben angegebenen, erfindungsgemäßen Mikroreaktor mit den oben erläuterten Vorteilen. Zudem lässt sich das Herstellungsverfahren einfach steuern, vorzugsweise indem der Ätzschritt, vorzugsweise mittels einer entsprechenden Maske, in einem vorbestimmten Bereich der ersten Schicht und/oder bis zu einer vorbestimmten Tiefe der ersten Schicht erfolgt, um lediglich in dem vorbestimmten Bereich und/oder bis zu der vorbestimmten Tiefe der ersten Schicht eine Hohlraumstruktur in der ersten Schicht zu erzeugen. Der Ätzschritt kann hierbei durch die Verwendung eines spezifischen Ätzmittels bzw. durch entsprechende Gestaltung der Ätzzeit und der Ätztemperatur gesteuert werden. Bevorzugt werden in dem Mantelbereich der Kristalle und/oder Kristallagglomerate der zweiten Komponente Übergangs- oder Zwischenphasen der zweiten Komponente geätzt.

Ebenfalls einfach und kostengünstig sowie technisch gut beherrschbar gestaltet sich das erfindungsgemäße Verfahren zur Herstellung des Substrats, wenn zum Auf- oder Einbringen des katalytisch aktiven Materials ein Abscheideverfahren aus der Dampfphase, vorzugsweise ein CVD-Verfahren oder ein PVD-Verfahren, verwendet wird.

Die durch das Porosizieren entstehende Hohlraumstruktur ist vorzugsweise als eine Poren- oder Röhrenstruktur ausgebildet.

Ebenfalls von Vorteil ist es, wenn die Matrix und die zweite Komponente vor dem Ätzschritt ein Glaskeramik-Material ausbilden. Das Ätzen wird hierdurch erleichtert und außerdem profitiert das aus diesem Material hergestellte Substrat und somit der Mikroreaktor, wie oben erläutert, von der geringen Wärmeleitfähigkeit des Glasmaterials. Zudem lässt sich das Material gut im Hinblick auf die erforderliche Kristallgröße und -verteilung der zweiten Komponente sowie der Mantelbereiche der Kristalle und Kristallagglomerate in der ersten Schicht und damit in Bezug auf die spätere Ausbildung der porosizierten Hohlraumstruktur steuern. Das Glaskeramikmaterial lässt sich außerdem sehr einfach mittels LTCC-Technologie verarbeiten. Die entsprechenden Folien (Tapes) sind kommerziell erhältlich.

Wie oben dargestellt, ist es von Vorteil, wenn die zweite Komponente Al₂O₃-Kristallite und/oder eine von Al₂O₃ verschiedene aluminiumbasierte kristalline Verbindung und/oder eine aluminiumoxidbasierte kristalline Verbindung enthält.

Besonders bevorzugt beinhaltet der Ätzschritt einen nasschemischen Ätzschritt, vorzugsweise mittels eines Phosphorsäure-basierten Ätzmittels, da ein derartiger Ätzvorgang einfach durchführbar ist.

Es wurde ebenfalls oben bereits erläutert, dass die Verwendung von Substratmaterial, das mindestens zwei Schichten aufweist und wobei die mindestens zwei Schichten zunächst als LTCC hergestellt werden, und anschließend in der ersten Schicht die Hohlraumstruktur erzeugt wird, eine Reihe von Vorteilen aufweist.

Besonders bevorzugt ist weiterhin, dass in und/oder auf die erste Schicht und/oder in oder auf die mindestens eine weitere Schicht ein Heizelement unterhalb oder oberhalb des Bereichs mit der Hohlraumstruktur eingebracht wird. Hierbei kann in einem besonders bevorzugten Ausführungsbeispiel das Heizelement im Rahmen des LTCC-Prozesses in der über oder unter der ersten Schicht angeordneten zweiten Schicht mittels Dickschichttechnik hergestellt und anschließend durch Vias kontaktiert werden.

Für die Herstellung einer Substrat-Membran, die beispielsweise senkrecht zur Strömungsrichtung des mindestens einen Edukts im Mikroreaktor angeordnet werden soll, wird in einem bevorzugten Verfahren zur Herstellung für das Substrat lediglich eine erste Schicht bereitgestellt und die Hohlraumstruktur mittels Ätzen der Mantelbereiche der Kristalle und/oder Kristallagglomerate der zweiten Komponente in einem bestimmten Bereich der ersten Schicht über die gesamte Dicke des Substrats erzeugt. Hierbei wird unter Dicke des Substrats die Ausdehnung des Substrats verstanden, die bei der Anordnung des Substrats in dem Reaktionsraum parallel zur Strömungsrichtung des mindestens einen Substrats verläuft. Das mindestens eine Edukt passiert daher die Hohlraumstruktur im Wesentlichen in Richtung der Dicke des Substrats.

Ein besonders bevorzugtes Herstellungsverfahren beinhaltet zusätzlich den Schritt, dass in oder auf dem Substrat in Strömungsrichtung des mindestens einen Edukts vor dem Abschnitt des Substrats mit der Hohlraumstruktur ein sensorisches Element, vorzugsweise zur Messung der Strömungsgeschwindigkeit, angeordnet wird. Alternativ oder zusätzlich kann in dem Substrat in Strömungsrichtung eines Edukts nach dem Abschnitt des Substrats mit der Hohlraumstruktur in oder auf dem Substrat mindestens ein sensorisches Element, vorzugsweise ein chemischer Sensor zur Messung der Güte des Umwandlungsprozesses, angeordnet werden. Die Sensoren können dabei entweder monolithisch in das Substrat integriert werden, z.B. als beheizter Dickschichtwiderstand im Falle der Messung der Strömungsgeschwindigkeit, oder es können entsprechend vorkonfektionierte Sensoren verwendet werden, die mit dem Substrat ggf. in einer bestimmten, vorgegebenen Tiefe des Substrats verbunden werden.

Die oben angegebene Aufgabe wird zudem durch ein Verfahren zur Herstellung eines Mikroreaktors gelöst, bei dem zunächst mindestens ein erfindungsgemäßes Substrat nach einem oben angegebenen, erfindungsgemäßen Verfahren hergestellt wird und anschließend das mindestens eine Substrat derart angeordnet wird, dass es einen Abschnitt der Wand eines Reaktionsraums derart ausbildet, dass mindestens ein Edukt an der Hohlraumstruktur vorbeiströmt.

Ebenso wird die oben angegebene Aufgabe durch ein Verfahren zur Herstellung eines Mikroreaktors gelöst, bei dem zunächst ein Substrat bestehend aus lediglich der ersten Schicht und einer sich in einem vorgegebenen Bereich über die gesamte Dicke erstreckender Hohlraumstruktur hergestellt wird und anschließend das Substrat in dem Reaktionsraum derart angeordnet wird, dass das Edukt durch die Hohlraumstruktur hindurch strömt.

Beide erfindungsgemäße Verfahren zur Herstellung von Mikroreaktoren lassen sich einfach realisieren und erfordern lediglich die richtige Ausrichtung des Substrats oder der Substrate im Reaktionsraum.

Weitere Ziele, Merkmale, Vorteile und Anwendungsmöglichkeiten der Erfindung ergeben sich aus der nachfolgenden Beschreibung eines Ausführungsbeispiels anhand von Figuren. Alle beschriebenen und/oder bildlich dargestellten Merkmale bilden für sich oder in beliebiger Kombination den Gegenstand der vorliegenden Erfindung, unabhängig von ihrer Zusammenfassung in den einzelnen Ansprüchen oder deren Rückbeziehung.

### Es zeigen schematisch:

- Fig. 1: einen Querschnitt eines ersten Ausführungsbeispiels eines erfindungsgemäßen Mikroreaktors,
- Fig. 2: einen Querschnitt eines zweiten Ausführungsbeispiels eines erfindungsgemäßen Mikroreaktors und
- Fig. 3: einen Querschnitt eines dritten Ausführungsbeispiels eines erfindungsgemäßen Mikroreaktors.

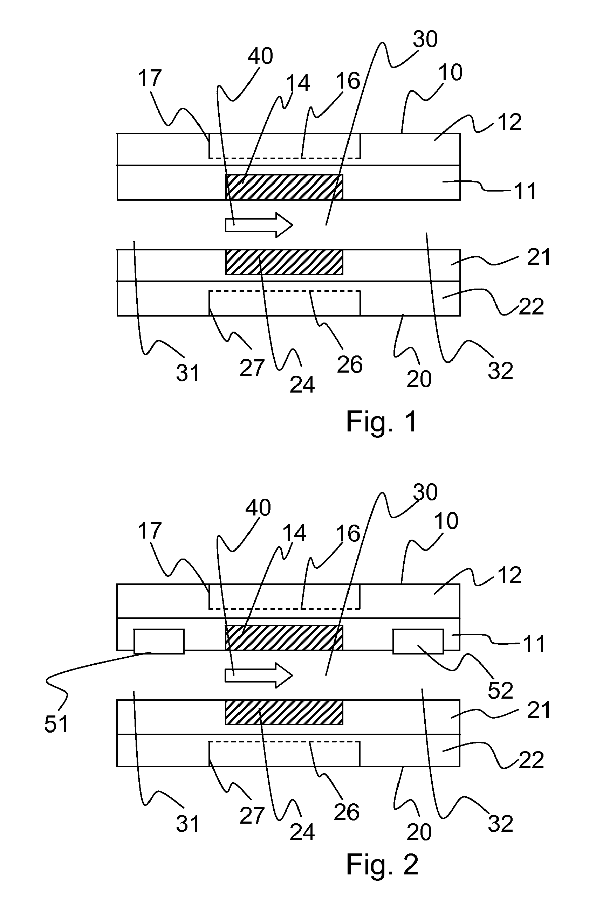

Figur 1 zeigt einen Schnitt durch einen erfindungsgemäßen Mikroreaktor, bei dem durch ein erstes Substrat 10 und ein zweites Substrat 20 ein Reaktionsraum 30 ausgebildet wird. Das erste Substrat 10 weist eine erste Schicht 11 und eine zweite Schicht 12 auf, die übereinander angeordnet sind. Hierbei ist das erste Substrat 10 als ein im Wesentlichen plattenförmiges Element gestaltet. Analog zu dem ersten Substrat 10 besteht auch das zweite, plattenförmige Substrat 20 aus einer ersten Schicht 21 und einer zweiten Schicht 22, die ebenfalls übereinander angeordnet sind. Jeweils die ersten Schichten 11, 21 der Substrate 10, 20 sind benachbart zum Reaktionsraum 30 angeordnet.

Die erste Schicht 11 weist einen porosizierten Bereich 14 auf, in dem eine durch Porosizieren hergestellte Hohlraumstruktur vorliegt. Dem porosizierten Bereich 14 der ersten Schicht 11 liegt ein weiterer poroszierter Bereich 24, der in der ersten Schicht 21 des zweiten Substrats 20 angeordnet ist, gegenüber. Der Reaktionsraum 30 wird insbesondere zwischen den beiden porosizierten Bereichen 14, 24 der Substrate 10, 20 ausgebildet.

Die ersten Schichten 11, 21 und die zweiten Schichten 12, 22 bestehen vorzugsweise aus einer gesinterten Glaskeramik, zum Beispiel einem LTCC-Tape mit der Zusammensetzung 30% SiO₂, 40% Al₂O₃, 4% CaO, 9% PbO, 2% B₂O₃ + Rest - bekannt unter der Produktbezeichung DP951, der Zusammensetzung 30% SiO₂, 20% Al₂O₃, 3% CaO, 5% SrO, 17% BaO, 5% ZnO + Rest - bekannt als "Heraeus-Tape" - oder der Zusammensetzung ca. 50% Al₂O₃, ca. 15% B₂O₃, ca. 15% La₂O₃, + Rest, welche unter der Produktbezeichnung DP943 der Fa. Hereaus bekannt ist, wobei sich die ersten Schichten 11, 21 von den zweiten Schichten 12, 22 in ihrer Zusammensetzung geringfügig voneinander unterscheiden können. Dieses Substratmaterial wird mit der jeweils ersten Schicht 11, 21 zum Porosizieren bei einer Temperatur von 110°C in eine geeignete Ätzlösung (zum Beispiel für DP951, "Hereaus-Tape" und DP943 Phosphorsäure) gelegt. Alternativ kann der Porosiziervorgang auch mit KOH (Kalilauge) mit einer Konzentration von etwa 40% bei einer Temperatur im Bereich von 80°C durchgeführt werden. Die Ätztiefe, das heißt die Tiefe des porosizierten Bereichs 14, 24 in der jeweiligen ersten Schicht 11, 21 ist von der Art des Ätzmediums, der gewählten Ätztemperatur und der Ätzzeit abhängig. Bei der Verwendung des Ätzmittels Phosphorsäure für die Glaskeramik DP951 wird beispielsweise bei einer Ätztemperatur von 110°C eine Eindringtiefe von 15 µm bei einer Ätzzeit von 4 Stunden erreicht. Die jeweiligen porosizierten Bereiche 14, 24 weisen durch die mittels des Porosiziervorgangs erzielte Hohlraumstruktur eine große Oberfläche auf.

Die in den porosizierten Bereichen 14, 24 vorliegende Hohlraumstruktur wird abschließend mit einem katalytisch aktiven Material beschichtet, das bevorzugt aus der Dampfphase (zum Beispiel über einen CVD-Prozess oder einen PVD-Prozess) abgeschieden wird, um eine homogene Bedeckung der Poren und Spalten zu erreichen. Hierbei können als katalytisch aktive Materialien beispielsweise Platin, Palladium oder Nickel eingesetzt werden.

Nach der Beschichtung werden die Substrate 10, 20 in die gewünschten Bereiche des Mikroreaktors, bspw. wie in Figur 1 gezeigt, eingesetzt und dort befestigt.

Das in Figur 1 dargestellte Ausführungsbeispiel eines erfindungsgemäßen Mikroreaktors bildet zwischen dem ersten Substrat 10 und dem zweiten Substrat 20 einen Mikrokanal mit einem Einlass 31 und einem Auslass 32 und dem zwischen Einlass 31 und Auslass 32 angeordneten Reaktionsraum 30 aus. Das mindestens eine fluidische Edukt gelangt über den Einlass 31 in den Reaktionsraum 30, in dem mittels des katalytisch aktiven Materials (Katalysators) die gewünschte Reaktion stattfindet. Eine mögliche Reaktion wäre die Aufoxidation von Kohlenmonoxid zu Kohlendioxid mit Hilfe eines Platinkatalysators:

2 CO+O₂→ 2CO₂ (unter Anwendung des Katalysators Pt).

Das durch die chemische Reaktion entstandene Produkt, im obigen Beispiel CO₂, verlässt den mikrofluidischen Kanal über den Auslass 32. Der Strömungsweg des Edukts/Produkts wird in Figur 1 durch den im mikrofluidischen Kanal angeordneten Pfeil 40 veranschaulicht.

Da viele Reaktionen ein bestimmtes Temperaturniveau benötigen (im vorgenannten Beispiel benötigt der Platin-Katalysator eine Anspringtemperatur von 250°C), ist jeweils in der zweiten Schicht 12, 22 der Substrate 10, 20 ein Heizelement 16, 26 angeordnet. Hierbei ist das jeweilige Heizelement 16, 26 über Vias 17, 27 mit der Spannungsquelle verbunden. Das Heizelement 16, 26, das vorzugsweise mäanderförmig ausgebildet ist, kann im herkömmlichen LTCC-Prozess in der zweiten Schicht 12, 22 mittels Dickschichttechnik hergestellt werden. In die zweite Schicht 12, 22 werden anschließend die Vias 17, 27 eingebracht und mit der nicht dargestellten Spannungsquelle und dem jeweiligen Heizelement 16, 26 verbunden.

Das in Figur 2 dargestellte Ausführungsbeispiel enthält gegenüber dem in Figur 1 gezeigten Ausführungsbeispiel zusätzlich im Bereich des Einlasses 31 ein sensorisches Element 51, das beispielsweise die Strömungsgeschwindigkeit des einströmenden Edukts misst. Hierbei ist das sensorische Element 51 in der ersten Schicht 11 des ersten Substrats 10 angeordnet. Alternativ kann das sensorische Element auch in der ersten Schicht 21 des zweiten Substrats 20 oder je ein sensorisches Element in beiden Substraten 10, 20 vorgesehen sein.

Ferner ist in dem in Figur 2 dargestellten Ausführungsbeispiel ein sensorisches Element 52 vorgesehen, das in der ersten Schicht 11 des ersten Substrats 10 im Bereich des Auslasses 32 angeordnet ist. Dieses sensorische Element ermittelt beispielsweise die Güte des Umwandlungsprozesses, also beispielsweise die Konzentration an CO₂ im aus dem Mikrokanal ausströmenden Volumenstrom. Analog zu dem sensorischen Element 51 kann das sensorische Element 52 auch in der ersten Schicht 21 des zweiten Substrats 20 oder in beiden Substraten 10, 20 vorgesehen sein.

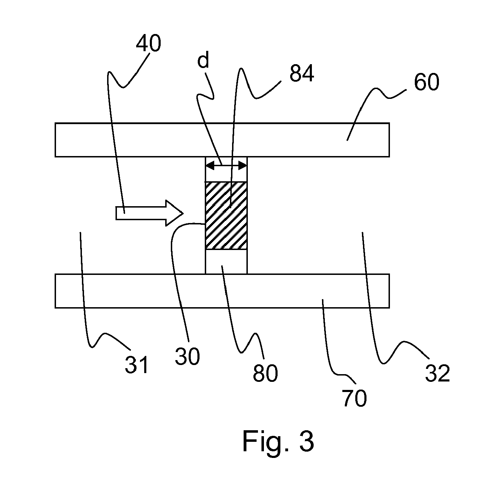

In dem in Figur 3 dargestellten dritten Ausführungsbeispiel eines erfindungsgemäßen Mikroreaktors wird der Strömungsweg des Edukts/Produkts zwischen Einlass 31 und Auslass 32 durch eine erste Wand 60 und eine zweite Wand 70 ausgebildet. Die Wände 60, 70 können beispielsweise aus einem Keramikmaterial gefertigt sein. Im Bereich des Reaktionsraums 30, der zwischen Einlass 31 und Auslass 32 vorgesehen ist, ist eine Substrat-Membran 80 angeordnet, die lediglich einschichtig aufgebaut ist und einen porosizierten Bereich 84 aufweist. Wie Pfeil 40 anzeigt, der die Strömungsrichtung des Edukts/Produkts bzw. der Edukte/Produkte angibt, ist die porosizierte Membran 80 senkrecht zur Strömungsrichtung angeordnet, so dass der gesamte Medienfluss des Edukts oder der Edukte durch die Membran 80 mit dem porosizierten Bereich 84 gezwungen wird. Die Membran 80 ist hierbei über ihre gesamte Dicke d (die Dicke d entspricht der Ausdehnung der Membran 80 in Strömungsrichtung) porosiziert und anschließend mit einem katalytisch aktiven Material beschichtet.

Der Vorteil des oben dargestellten dritten Ausführungsbeispiels eines erfindungsgemäßen Mikroreaktors besteht in der erhöhten Konversationsrate. Allerdings könnte aufgrund des Durchtretens des gesamten Medienflusses durch die Membran 80 eine vergleichsweise hohe Drosselung des Systems bewirkt werden.

Bezugszeichenliste
- 10: erstes Substrat
- 11: erste Schicht des ersten Substrats 10
- 12: zweite Schicht des ersten Substrats 10
- 14: porosizierter Bereich der ersten Schicht 11
- 16: Heizelement
- 17: Via
- 20: zweites Substrat
- 21: erste Schicht des zweiten Substrats 20
- 22: zweite Schicht des zweiten Substrats 20
- 24: porosizierter Bereich der ersten Schicht 21
- 26: Heizelement
- 27: Via
- 30: Reaktionsraum
- 31: Einlass
- 32: Auslass
- 40: Pfeil
- 51: sensorisches Element
- 52: sensorisches Element
- 60: erste Wand
- 70: zweite Wand
- 80: Membran-Substrat bestehend aus einer Schicht
- 84: porosizierter Bereich der Membran 80
- d: Dicke der Membran 80

## Patentansprüche

1. Mikroreaktor, der ein Substrat (10, 20, 80) mit einer Hohlraumstruktur und mindestens ein auf und/oder in der Hohlraumstruktur angeordnetes katalytisch aktives Material aufweist, **dadurch gekennzeichnet, dass** das Substrat (10, 20, 80) eine erste Schicht (11, 21, 80) und ggf. mindestens eine weitere Schicht (12, 22) aus einem keramischen Material aufweist, wobei die erste Schicht (11, 21, 80) aus mindestens einer ersten Komponente aus einem kristallinen Keramikmaterial und/oder einem Glasmaterial als Matrix und einer zweiten Komponente aus einem weiteren kristallinen Keramikmaterial enthält, wobei die Hohlraumstruktur (14, 24, 84) **dadurch** gebildet ist, dass Mantelbereiche der Kristalle und/oder Kristallagglomerate der zweiten Komponente in der ersten Schicht (11, 21, 80) mindestens bereichsweise herausgeätzt sind.

2. Mikroreaktor nach Anspruch 1, **dadurch gekennzeichnet, dass** die Hohlraumstruktur (14, 24, 84) eine Poren- oder Röhrenstruktur ist.

3. Mikroreaktor nach einem der vorhergehenden Ansprüche, **dadurch gekennzeichnet, dass** das mindestens eine katalytisch aktive Material mittels Abscheidung aus der Gasphase auf und/oder in der Hohlraumstruktur (14, 24, 84) aufgebracht ist und/oder mindestens ein Element oder eine Verbindung ausgewählt aus der Gruppe Platin, Palladium, Nickel und Rhodium enthält.

4. Mikroreaktor nach einem der vorhergehenden Ansprüche, **dadurch gekennzeichnet, dass** die geätzte Hohlraumstruktur (14, 24, 84) lediglich in einem vorbestimmten Bereich der ersten Schicht (11, 21, 80) vorliegt und bis in eine vorbestimmte Tiefe der ersten Schicht (11, 21, 80) reicht.

5. Mikroreaktor nach einem der vorhergehenden Ansprüche, **dadurch gekennzeichnet, dass** die zweite Komponente Al₂O₃-Kristallite und/oder eine von Al₂O₃ verschiedene aluminiumbasierte kristalline Verbindung und/oder eine aluminiumoxidbasierte kristalline Verbindung, vorzugsweise mit einem Gesamtanteil von höchstens 40 Volumen% in der Matrix, und in den Mantelbereichen der Kristalle und/oder Kristallagglomerate vorzugsweise Silizium und/oder Blei enthält.

6. Mikroreaktor nach einem der vorhergehenden Ansprüche, **dadurch gekennzeichnet, dass** das Substrat (10, 20, 80) mindestens eine zweite Schicht (12, 22) aufweist, wobei die erste Schicht (11, 21, 80) und mindestens eine zweite Schicht (12,22) mittels LTCC-Technologie hergestellt sind und/oder dass das Substrat (10, 20) mit der Hohlraumstruktur (14, 24) mindestens einen Abschnitt einer Wand eines Reaktionsraums (30) des Mikroreaktors, in dem die Umwandlung mindestens eines Edukts in mindestens ein Produkt stattfindet, bildet, wobei der Bereich mit der Hohlraumstruktur (14, 24) derart angeordnet ist, dass das mindestens eine Edukt an dem Bereich mit der Hohlraumstruktur (14, 24) vorbeiströmt.

7. Mikroreaktor nach einem der vorhergehenden Ansprüche, **dadurch gekennzeichnet, dass** die erste Schicht (11, 21, 80) und/oder die mindestens eine zweite Schicht (12, 22) des Substrats (10, 20, 80) ein Heizelement (16, 26) aufweist, das vorzugsweise oberhalb oder unterhalb der in der ersten Schicht (11, 21, 80) vorgesehenen Hohlraumstruktur (14, 24, 84) angeordnet ist.

8. Mikroreaktor nach einem der Ansprüche 1 bis 5, **dadurch gekennzeichnet, dass** das Substrat (80), das lediglich aus der ersten Schicht besteht und in dem sich Hohlraumstruktur (84) in einem vorgegebenen Bereich über die gesamte Dicke (d) des Substrats (80) erstreckt, in dem Reaktionsraum derart angeordnet ist, dass das Edukt durch die Hohlraumstruktur (84) hindurchgeleitet wird.

9. Mikroreaktor nach Anspruch 7 oder 8, **dadurch gekennzeichnet, dass** in einem Kanal oder in dem Reaktionsraum (30) in Strömungsrichtung des Edukts vor dem Abschnitt des Substrats (10, 20, 80) mit der Hohlraumstruktur (14, 24, 84) in oder auf einem Träger oder dem Substrat (10, 20, 80) mindestens ein sensorisches Element (51), vorzugsweise zur Messung der Strömungsgeschwindigkeit, oder mindestens ein sensorisches Element (52), vorzugsweise ein chemischer Sensor zur Messung der Güte des Umwandlungsprozesses, angeordnet ist.

10. Verfahren zur Herstellung eines Substrats (10, 20, 80) für einen Mikroreaktor, wobei zunächst das Substrat (10, 20, 80) mit einer ersten und ggf. mindestens einer weiteren Schicht (11, 21, 12, 22, 80) bereitgestellt wird, wobei die erste Schicht (11, 21, 80), die aus mindestens einer ersten Komponente aus einem kristallinen Keramikmaterial und/oder einem Glasmaterial als Matrix und einer zweiten Komponente aus einem weiteren kristallinen Keramikmaterial besteht, die in der Matrix vorliegt, anschließend in einem vorgegebenen Bereich der ersten Schicht (11, 21, 80) selektiv Mantelbereiche der Kristalle und/oder Kristallagglomerate der zweiten Komponente geätzt werden, um eine Hohlraumstruktur (14, 24, 84) in der ersten Schicht (11, 21, 80) zu erzeugen, und schließlich ein katalytisch aktives Material auf und/oder in die Hohlraumstruktur (14, 24, 84) auf- und/oder eingebracht wird.

11. Verfahren nach Anspruch 10, **dadurch gekennzeichnet, dass** zum Auf- und/oder Einbringen des katalytisch aktiven Materials ein Abscheideverfahren aus der Dampfphase, vorzugsweise ein CVD-Verfahren, verwendet wird.

12. Verfahren nach einem der Ansprüche 10 oder 11, **dadurch gekennzeichnet, dass** in dem Mantelbereich der Kristalle und/oder Kristallagglomerate der zweiten Komponente eine Übergangs- oder Zwischenphase der zweiten Komponente geätzt wird.

13. Verfahren nach einem der Ansprüche 10 bis 12, **dadurch gekennzeichnet, dass** der Ätzschritt, vorzugsweise mittels einer entsprechenden Maske, in einem vorbestimmten Bereich der ersten Schicht (11, 21, 80) und/oder bis zu einer vorbestimmten Tiefe der ersten Schicht (11, 21, 80) erfolgt, um lediglich in dem vorbestimmten Bereich und/oder bis zu der vorbestimmten Tiefe der ersten Schicht eine Hohlraumstruktur (14, 24, 84) in der ersten Schicht (11, 21, 80) zu erzeugen und/oder dass der Ätzschritt einen nasschemischen Ätzschritt, vorzugsweise mittels eines Phosphorsäure-basierten Ätzmittels, beinhaltet.

14. Verfahren nach einem der Ansprüche 10 bis 13, **dadurch gekennzeichnet, dass** die Matrix und die zweite Komponente vor dem Ätzschritt ein Glaskeramik-Material ausbilden.

15. Verfahren nach einem der Ansprüche 10 bis 14, **dadurch gekennzeichnet, dass** das Substrat (10, 20) mindestens zwei Schichten (11, 12, 21, 22) aufweist und dass die mindestens zwei Schichten (11, 12, 21, 22) zunächst mittels LTCC-Technologie hergestellt werden und anschließend in der ersten Schicht (11, 21) die Hohlraumstruktur (14, 24) erzeugt wird.

16. Verfahren nach einem der Ansprüche 10 bis 14, **dadurch gekennzeichnet, dass** für das Substrat (80) lediglich eine erste Schicht (80) bereitgestellt wird und die Hohlraumstruktur (84) mittels Ätzen der Mantelbereiche der Kristalle und/oder Kristallagglomerate der zweiten Komponente in einem bestimmten Bereich der ersten Schicht über die gesamte Dicke (d) des Substrats (80) erzeugt wird.
